(19) Europäisches Patentamt
European Patent Office
Office européen des brevets

(11) EP 2 887 103 A1

(12) EUROPEAN PATENT APPLICATION

(43) Date of publication:
24.06.2015 Bulletin 2015/26

(51) Int Cl.:
$G01V\ 5/08$ (2006.01)     $G21G\ 1/12$ (2006.01)

(21) Application number: 13306854.4

(22) Date of filing: 23.12.2013

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(71) Applicants:
• Services Pétroliers Schlumberger
75007 Paris (FR)
Designated Contracting States:
FR
• SCHLUMBERGER TECHNOLOGY B.V.
2514 JG  Den Haag (NL)
Designated Contracting States:
AL AT BE BG CH CY CZ DE DK EE ES FI GR HR
HU IE IS IT LI LT LU LV MC MK MT NO PL PT RO
RS SE SI SK SM TR
• Schlumberger Holdings Limited
Tortola 1110 (VG)
Designated Contracting States:
GB NL

(72) Inventors:
• Mauborgne, Marie-Laure
92142 Clamart CEDEX (FR)
• Haranger, Fabien
Princeton Junction, NJ 08550 (US)
• Luling, Martin G.
92142 Clamart CEDEX (FR)
• Manclossi, Mauro
92142 Clamart CEDEX (FR)
• Saenger, Richard
92142 Clamart CEDEX (FR)

(74) Representative: Ford, Michael Frederick et al
Schlumberger Cambridge Research Limited
High Cross
Madingley Road
Cambridge CB3 0EL (GB)

(54) **Artificially activated radioactive source for a downhole tool**

(57)    Methods and downhole tools relating to an artificially activated radioactive source for well logging are provided. Such a method may involve irradiating an otherwise substantially nonradioactive material to produce an artificially activated radioactive source that causes radiation to be emitted into a geological formation as the artificially activated radioactive source decays. The artificially activated radioactive source may be installed in a downhole tool. The downhole tool may be placed into a wellbore to perform a radiation-based logging operation using the radiation that is caused to be emitted into the geological formation by the artificially activated radioactive source.

FIG. 2

**Description**

## BACKGROUND

This disclosure relates generally to downhole tools and, more particularly, to artificially activating a radioactive source for downhole well logging.

This section is intended to introduce the reader to various aspects of art that may be related to various aspects of the present techniques, which are described and/or claimed below. This discussion is believed to be helpful in providing the reader with background information to facilitate a better understanding of the various aspects of the present disclosure. Accordingly, it should be understood that these statements are to be read in this light, and not as admissions.

When a well is drilled into a geological formation, a variety of downhole tools may be used to determine characteristics of the well and the surrounding geological formation. Certain downhole tools use gamma-rays to determine a characteristic of the surrounding geological formation known as the formation density. The formation density measurement obtained based on gamma-rays may also be referred to as a gamma density measurement. In combination with other measurements, such as hydrogen index, the formation density measurement may be used to determine the degree to which a formation is gas-filled or liquid-filled.

A gamma-ray downhole tool that measures the formation density may emit radiation to cause gamma-rays to traverse the geological formation. As the gamma-rays move through the geological formation, the gamma-rays may Compton scatter from the electrons present in the formation before being detected by a gamma-ray detector in the downhole tool spaced some distance from the radiation source that caused the gamma-rays to occur in the formation. Since the electron concentration in the formation is proportional to the atomic number of the elements of the formation, and the degree to which the gamma-rays Compton scatter and return to the gamma-ray detector relates to the electron concentration, the density of the formation may be detected using this technique.

Many gamma-ray downhole tools may produce the gamma-rays in the formation by directly irradiating the formation with gamma-rays using a radioisotopic source (e.g., $^{137}$Cs or $^{241}$AmBe). The use of radioisotopic sources such as $^{137}$Cs or $^{241}$AmBe may be undesirable, however, because such radioisotopic sources may present an environmental concern and may involve special handling requirements. Specifically, these radioisotopic sources each have a relatively long half-life and may remain radioactive for several years. In addition, these radioisotopic sources may take the form of small pieces of material that are welded to a cork-sized piece of metal, which could potentially be lost at a well site while continuously emitting undesirable gamma-rays.

## SUMMARY

A summary of certain embodiments disclosed herein is set forth below. It should be understood that these aspects are presented merely to provide the reader with a brief summary of these certain embodiments and that these aspects are not intended to limit the scope of this disclosure. Indeed, this disclosure may encompass a variety of aspects that may not be set forth below.

This disclosure relates to methods and downhole tools involving an artificially activated radioactive source for well logging. In one example, a method may involve irradiating an otherwise substantially non-radioactive material to produce an artificially activated radioactive source that emits radiation as the artificially activated radioactive source decays. The artificially activated radioactive source may be installed in a downhole tool. The downhole tool may be placed into a wellbore to perform a radiation-based logging operation using the radiation emitted by the artificially activated radioactive source.

In another example, a downhole tool may include an artificially activated radioactive source that causes radiation to be emitted into a surrounding formation as the artificially activated radioactive source decays. One or more radiation detectors may detect radiation that results when the radiation caused by the artificially activated radioactive source to be emitted interacts with the surrounding formation to obtain a radiation-based well logging measurement.

In another example, a downhole tool for obtaining a radiation-based well logging measurement may include a radioisotopic source having a half-life of less than one day.

Various refinements of the features noted above may be made in relation to various aspects of the present disclosure. Further features may also be incorporated in these various aspects as well. These refinements and additional features may be made individually or in any combination. For instance, various features discussed below in relation to one or more of the illustrated embodiments may be incorporated into any of the above-described aspects of the present disclosure alone or in any combination. The brief summary presented above is intended to familiarize the reader with certain aspects and contexts of embodiments of the present disclosure without limitation to the claimed subject matter.

## BRIEF DESCRIPTION OF THE DRAWINGS

Various aspects of this disclosure may be better understood upon reading the following detailed description and upon reference to the drawings in which:

FIG. 1 is a schematic diagram of a drilling system that may employ a downhole tool with an artificially activated radioactive source, in accordance with an embodiment;

FIG. 2 is a block diagram of the operation of the downhole tool to obtain a gamma density measurement, in accordance with an embodiment;

FIG. 3 is a flowchart of a method for performing a radiation-based logging operation, such as the gamma density measurement, using the artificially activated radioactive source, in accordance with an embodiment;

FIG. 4 is a flow diagram showing the use of Bremsstrahlung irradiation to artificially activate elements of the artificially activated radioactive source, in accordance with an embodiment;

FIG. 5 is a plot of a nuclear reaction cross section for activating the artificially activated radioactive source with respect to the energy of Bremsstrahlung radiation used to irradiate the source, in accordance with an embodiment;

FIG. 6 is a flow diagram illustrating the activation of the source via a linear accelerator (LINAC), in accordance with an embodiment; and

FIG. 7 is a schematic diagram illustrating the activation of the source via a laser, in accordance with an embodiment.

## DETAILED DESCRIPTION

One or more specific embodiments of the present disclosure will be described below. These described embodiments are examples of the presently disclosed techniques. Additionally, in an effort to provide a concise description of these embodiments, features of an actual implementation may not be described in the specification. It should be appreciated that in the development of any such actual implementation, as in any engineering or design project, numerous implementation-specific decisions may be made to achieve the developers' specific goals, such as compliance with system-related and business-related constraints, which may vary from one implementation to another. Moreover, it should be appreciated that such a development effort might be complex and time consuming, but would be a routine undertaking of design, fabrication, and manufacture for those of ordinary skill having the benefit of this disclosure.

When introducing elements of various embodiments of the present disclosure, the articles "a," "an," and "the" are intended to mean that there are one or more of the elements. The terms "comprising," "including," and "having" are intended to be inclusive and mean that there may be additional elements other than the listed elements. Additionally, it should be understood that references to "one embodiment" or "an embodiment" of the present disclosure are not intended to be interpreted as excluding the existence of additional embodiments that also incorporate the recited features.

This disclosure relates to using an artificially activated radioactive source for radiation-based measurements in a downhole tool. Such a downhole tool may be part of a drill string used to drill a wellbore for an oil and/or gas well or may be a downhole tool of any other suitable conveyance, downhole tool conveyed by wireline or coiled tubing. The downhole tool may be equipped with the artificially activated radioactive source to cause radiation to be emitted into a surrounding geological formation to obtain radiation-based measurements (e.g., the artificially activated radioactive source may emit positrons that cause gamma-rays to form through annihilation of the positrons with nearby electrons, and the gamma rays may exit the downhole tool into the surrounding formation). The artificially activated radioactive source begins as a substantially non-radioactive source containing substantially just non-radioactive elements (e.g., stable isotopes of copper). Before being lowered into the well, the non-radioactive source may be irradiated with Bremsstrahlung radiation, which may cause some of the elements of the non-radioactive source (e.g., $^{65}$Cu) to become radioactive elements with a relatively short half-life (e.g., $^{64}$Cu). The half-life of the radioactive elements may be on the order of a few hours or days (e.g., 12.7 hours for $^{64}$Cu), rather than a half-life on the order of years. The artificially activated radioactive source may be used for logging operations within the downhole tool. When the logging operations have completed, the source may have decayed into a stable (i.e., substantially non-radioactive) source that emits relatively little radiation. The resulting substantially non-radioactive source may be able to be handled without many of the special precautions and environmental concerns that may otherwise accompany a long-lived radioisotopic source. Although this disclosure describes, by way of example, irradiating an isotope of copper to obtain the artificially activated radioactive source, any other suitable element that can be irradiated to form an artificially activated radioactive source having a relatively short half-life (e.g., on the order of hours or days) may be used.

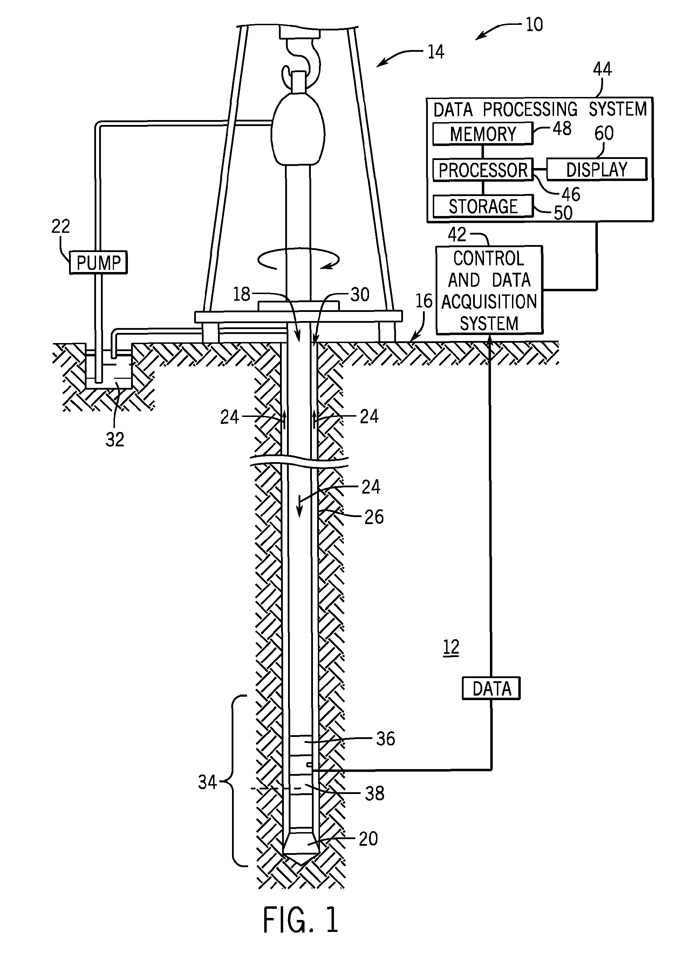

With this in mind, FIG. 1 illustrates a drilling system 10 that may employ a downhole tool with such an artificially activated radiation source. The drilling system 10 of FIG. 1 may be used to drill a well into a geological formation 12 and obtain radiation-based measurements, such as gamma density measurements or photoelectric effect (PEF) measurements, to identify characteristics of the well. In the drilling system 10, a drilling rig 14 at the surface 16 may rotate a drill string 18 that includes a drill bit 20 at its lower end. As the drill bit 20 is rotated, a drilling fluid pump 22 is used to pump drilling fluid, referred to as "mud" or "drilling mud," downward through the center of the drill string 18 in the direction of the arrow 24 to the drill bit 20. The drilling fluid, which is used to cool and lubricate the drill bit 20, exits the drill string 18 through ports (not shown) in the drill bit 20. The drilling fluid then carries drill cuttings away from the bottom of a borehole 26 as it flows back to the surface 16, as shown by the arrows 28 through an annulus 30 between the drill string 18 and the geological formation 12. However, as described above, as the drilling fluid flows through the annulus 30 between the drill string 18 and the geological formation 12, the drilling mud may begin to invade and mix with the fluids stored in the formation, which may be referred to as formation fluid (e.g., natural gas or oil). At the surface 16, the return drilling fluid is filtered and conveyed back to a mud pit 32 for reuse.

As illustrated in FIG. 1, the lower end of the drill string 18 includes a bottom-hole assembly (BHA) 34 that may include the drill bit 20 along with various downhole tools. The downhole tools may collect a variety of information relating to the geological formation 12 and/or the state of drilling of the well. For instance, a measurement-while-drilling (MWD) tool 36 may measure certain drilling parameters, such as the temperature, pressure, orientation of the drilling tool, and so forth. Likewise, a logging-while-drilling (LWD) tool 38 may measure the physical properties of the geological formation 12, such as density, photoelectric effect (PEF), porosity, resistivity, and so forth.

The LWD tool 38 may collect a variety of data 40 that may be stored and processed within the LWD tool 38 or, as illustrated in FIG. 1, may be sent to the surface for processing. In the example of this disclosure, the LWD tool 38 may include a gamma density tool and/or a photoelectric effect (PEF) tool that may detect gamma-rays that result when radiation (e.g., positrons) emitted from an artificially activated radiation source cause gamma rays to be emitted into the surrounding formation 12. By detecting the gamma-rays that return to detectors in the LWD tool 38, measurements such as gamma density or PEF may be determined. Indeed, the data 40 that is collected may include counts and/or energies of gamma-rays that reach corresponding detectors in the LWD tool 38. The data 40 may be sent via a control and data acquisition system 42 to a data processing system 44. The control and data acquisition system 42 may receive the data 40 in any suitable way. In one example, the control and data acquisition system 42 may transfer the data 40 via electrical signals pulsed through the geological formation 12. In another example, the data 40 may be retrieved directly from the LWD tool 38 when the LWD tool 38 returns to the surface.

The data processing system 44 may include a processor 46, memory 48, storage 50, and/or a display 52. The data processing system 44 may use the data 40 to determine various properties of the well using any suitable techniques. To process the data 40, the processor 46 may execute instructions stored in the memory 48 and/or storage 50. As such, the memory 48 and/or the storage 50 of the data processing system 44 may be any suitable article of manufacture that can store the instructions. The memory 46 and/or the storage 50 may be ROM memory, random-access memory (RAM), flash memory, an optical storage medium, or a hard disk drive, to name a few examples. The display 52 may be any suitable electronic display that can display well logs and/or other information relating to properties of the well as measured by the LWD tool 38. Before continuing, it should be noted that, although FIG. 1 illustrates a logging-while-drilling (LWD) tool 38 that includes an artificially activated radioactive source, downhole tools of any other suitable means of conveyance may also employ the artificially activated radioactive source of this disclosure.

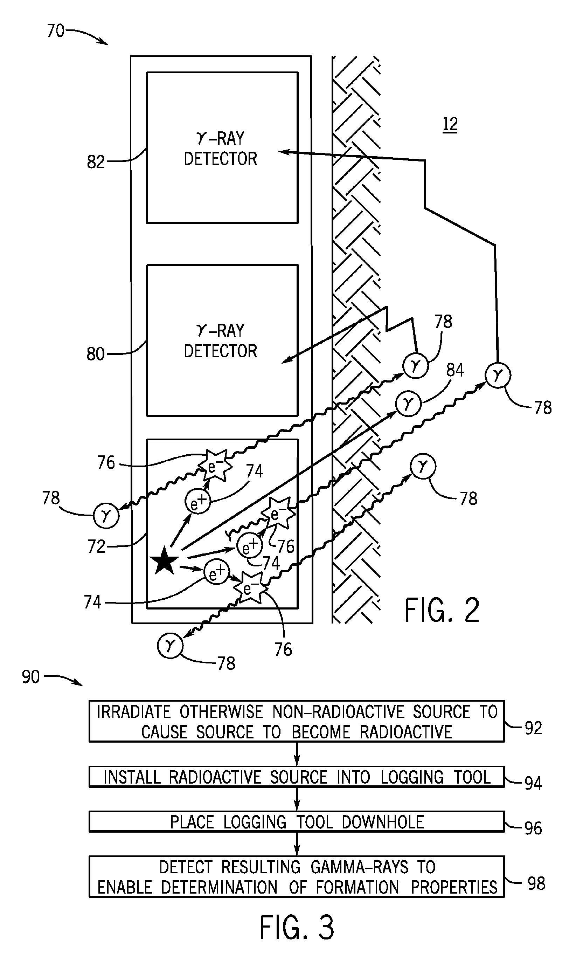

Indeed, an example gamma density tool 70 of FIG. 2 may use any suitable means of conveyance and may include an artificially activated radioactive source 72. The artificially activated radioactive source 72 may be a short-lived radioactive source formed from any suitable elements that can be activated at the surface to become radioactive. In one particular example of this disclosure, the artificially activated radioactive source 72 may be an amount of copper that has been activated at the surface to include a suitable concentration of the copper isotope $^{64}$Cu. The copper isotope $^{64}$Cu has a half-life of approximately 12.7 hours and emits a positron 74 when decaying into $^{64}$Ni. When the positrons 74 collide with electrons 76 (e.g., within a few $\mu$m from the artificially activated radioactive source 72), gamma-rays 78 may be generated and emitted into the geological formation 12. These gamma-rays 78 may be used in a gamma density measurement.

Indeed, the collision between the positrons 74 and the electrons 76 causes both of these particles to be annihilated, producing two monochromatic gamma-rays 78 each having an energy of 511 keV. These monochromatic gamma-rays 78 may traverse the formation, occasionally Compton scattering against electrons in the geological formation 12. Gamma-ray detectors 80 and 82 disposed at different spacings from the artificially activated radioactive source 72 may detect different amounts and/or energies of the gamma-rays 78 depending on the amount of Compton scattering in the geological formation 12 by the gamma-rays 78. The signals detected by the gamma-ray detectors 80 and 82 may correspond to the concentration of electrons in the geological formation 12 and, accordingly, the density of the geological formation 12. The signals detected by the gamma-ray detectors 80 and 82 therefore may be processed to determine an estimate of the electron density of the geological formation 12, from which the bulk density of the geological formation 12 may be derived.

When the artificially activated radioactive source 72 includes the isotope $^{64}$Cu, the isotope $^{64}$Cu may decay by approximately 18% by positron emission to $^{64}$Ni, in the manner noted above, which results in the formation of monochromatic gamma-rays 78 of 511 keV when the positrons 74 collide with the electrons 76. The isotope $^{64}$Cu may also decay in other ways as well, albeit in ways with less consequence for purposes of gamma density measurements. For example, the isotope $^{64}$Cu may decay by approximately 39% by beta decay to $^{64}$Zn, approximately 43% by electron capture to $^{64}$Ni, and approximately 0.5% through gamma radiation and/or internal conversion to emit directly emitted monochromatic gamma-rays 84. These emissions are 0.5787 MeV and 0.6531 MeV for beta minus and positron, respectively, and 1.355 MeV for the emission of the monochromatic gamma-rays 84. That is, the $^{64}$Cu emitted gamma-rays 84 and the positron-annihilated gamma-rays 78 are monochromatic, while the electrons from the beta decay generate a wide-band photon spectrum that may be substantially ignored for the purposes of determining a gamma density measurement.

The bulk density of the geological formation 12 may be derived from accurate measurements of the electron density. As mentioned above, the electron-density measurements are based on scattering (e.g., Compton scattering) of photons such as the gamma-rays 78 and 84 through the geological formation 12. Because the gamma-rays 78 and 84 derive from monochromatic sources with energies above 500 keV, the source energies of the gamma-rays 78 and 84 are far above the energy spectrum of the scattered-measured gamma-rays 78 and 84 that ultimately reach the detectors 80 and/or 82. Having a source energy above 500 keV may also distinguish the scattered-measured gamma-rays 78 and 84 from scattered gamma-rays deriving from the wide-band photon spectrum resulting from the beta decay of $^{64}$Cu. To determine the gamma density measurement, the artificially activated radioactive source 72 may have any suitable radioactivity to emit enough positrons 74 to result in enough gamma-rays 78 in the geological formation 12. In one example, the artificially activated radioactive source 72 may have an intensity of approximately 1.7 Curie (*Ci*), which corresponds to approximately $6*10^{10}$ decays/s. In other examples, the artificially activated radioactive source 72 may have an intensity that is suitably higher or lower depending on the particular parameters of the logging operation (e.g., duration, expected properties of the formation 12, drilling fluid in use, and so forth).

As seen in a flowchart 90 of FIG. 3, to obtain a gamma density measurement using the gamma density tool 70, an otherwise non-radioactive source (e.g., substantially stable copper) may be irradiated using Bremsstrahlung radiation to cause the artificially activated radioactive source 72 to become radioactive (e.g., to include $^{64}$Cu) (block 92). In one example, the otherwise non-radioactive source may be copper. The stable isotope $^{65}$Cu constitutes about 31 % of copper. Moreover, the radioactive isotope $^{64}$Cu that is discussed above may be produced from the stable copper isotope $^{65}$Cu by irradiation with photons (e.g., of greater than 10 MeV) from Bremsstrahlung radiation. As such, by selecting the otherwise non-radioactive source to be copper, irradiation with Bremsstrahlung radiation may result in the creation of the radioactive isotope $^{64}$Cu through nuclear reactions by the stable isotope $^{65}$Cu. In some embodiments, the time at which the irradiation ends may be noted to use as a reference for the decay of the artificially activated radioactive source 72 (e.g., for logging calibration).

The artificially activated radioactive source 72 may be placed into the logging tool 70 (block 94) and the logging tool 70 may be placed downhole in the well (block 96). As mentioned above, the artificially activated radioactive source 72 emits positrons 78 that may collide with the electrons 76 to generate the gamma-rays 78. The gamma-ray detectors 80 and/or 82 of the downhole tool 70 may detect the gamma-rays 78 after they have scattered (e.g., Compton scattered) through the geological formation 12 (block 98). The signals from the gamma-ray detectors 80 and/or 82 therefore may vary depending on the concentration of electrons in the geological formation 12, and thus may be used to determine the density of the geological formation 12.

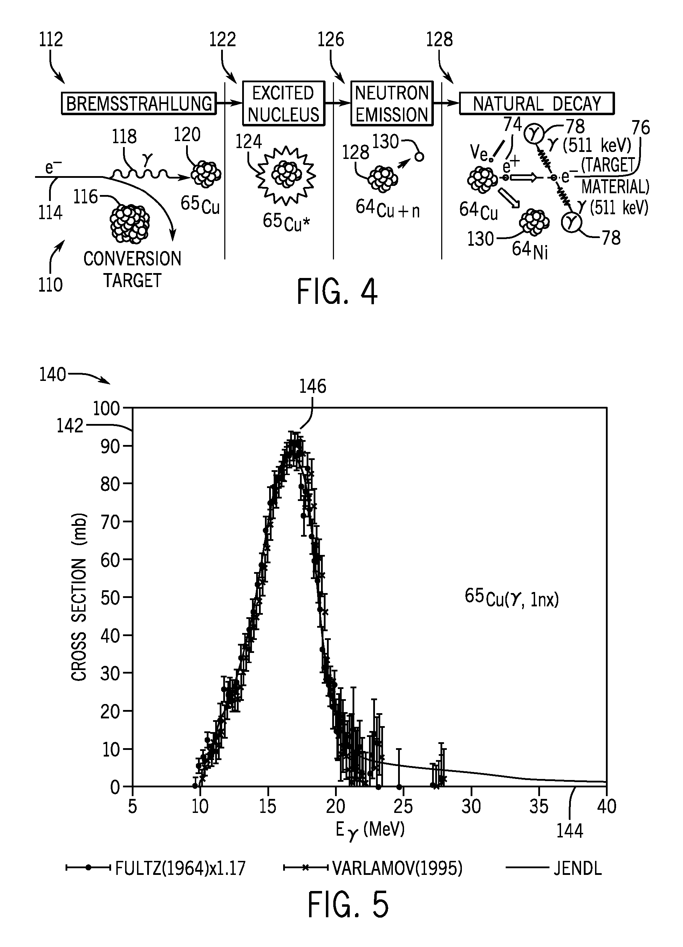

The artificially activated radioactive source 72 may become radioactive after irradiation by Bremsstrahlung radiation in a process shown by a flow diagram 110 of FIG. 4. The flow diagram 110 begins with a segment 112 in which an electron stream 114 is accelerated toward a conversion target 116 to produce Bremsstrahlung radiation 118. Namely, when the rapidly moving electron stream 114 reaches the conversion target 116, the electron stream 114 quickly decelerates. The rapid change in kinetic energy results in the photonic radiation known as Bremsstrahlung radiation 118. Some of the Bremsstrahlung radiation 118 may strike an otherwise non-radioactive source element 120, here illustrated as the stable copper isotope $^{65}$Cu.

The Bremsstrahlung radiation 118 may be generated using any suitable technique, such as using a linear accelerator (LINAC) or a laser, as will be described further below. As shown by a segment 122 of the flow diagram 110, when the non-radioactive source element 120

(e.g., $^{65}$Cu) is irradiated by Bremsstrahlung radiation 118 of sufficient energy, its nucleus may become excited 124. In the case of $^{65}$Cu, Bremsstrahlung radiation 118 of approximately 10 MeV or higher may be absorbed into the nucleus of $^{65}$Cu, which enters into a giant dipolar resonance. When the nucleus de-excites, as shown by a segment 126 of the flow diagram 110, an artificially activated radioactive source element 128 (e.g., $^{64}$Cu) may result as a neutron 130 is ejected. As mentioned above, the resulting artificially activated radioactive source element 128 may be a component of the artificially activated radioactive source 72, and may undergo a natural decay having a relatively short half-life. For instance, as shown by a segment 132 of the flow diagram 110, the artificially activated radioactive source element 128 (e.g., $^{64}$Cu) may decay into a decay element 134 (e.g., $^{64}$Ni), emitting a positron 74 in the process. When the positron 74 collides with an electron 76 and both particles annihilate, two monochromatic gamma-rays 78 of 511 keV are generated.

The nuclear reaction to generate the radioactive copper isotope $^{64}$Cu from the stable copper isotope $^{65}$Cu may be written as follows:

$$^{65}\text{Cu} + \gamma_{>10\text{MeV}} \rightarrow {}^{64}\text{Cu} + \text{n} \tag{1};$$

where the term $\gamma_{>10\text{MeV}}$ describes the absorption of a gamma-ray of Bremsstrahlung radiation of greater than 10 MeV energy and the term n represents a neutron.

A nuclear reaction cross section plot 140 of FIG. 5 illustrates the probability that the nuclear reaction of Equation 1 will occur given a particular energy of photonic radiation (e.g., the Bremsstrahlung radiation 118). The nuclear reaction cross section plot 140 compares an ordinate 142 representing the cross section (and therefore probability) of the reaction of Equation 1 in units of millibarn (mb) to an abscissa 144 representing the energy of the photonic radiation $E\gamma$ in units of MeV (e.g., the energy of the Bremsstrahlung radiation 118) that strikes the stable copper isotope $^{65}$Cu.

As seen in the plot 140, the reaction threshold is approximately 10 MeV and the reaction cross section reaches a peak 146 barely above 15 MeV. Because the nuclear reaction rate is proportional to the product between the cross section shown in the plot 140 and the flux of the Bremsstrahlung radiation 118, Bremsstrahlung radiation 118 having an energy of about 15 MeV may improve the likelihood that the reaction will occur. Bremsstrahlung radiation 118 of higher energy is also believed to be suitable to cause the nuclear reaction of Equation 1.

Indeed, the plot 140 illustrates that the reaction cross section is approximately 100 *mb* (millibarn). As mentioned above, the artificially activated radioactive source 72 may have an intensity of 1.7 *Ci,* which corresponds to approximately $6*10^{10}$ decays/s. When the radioactive copper isotope $^{64}$Cu is used as the artificially activated radioactive source element 128 as a component of the artificially activated radioactive source 72, approximately $3.6*10^{20}$ reactions may be induced in the sample of the stable isotope of copper $^{65}$Cu during the irradiation by Bremsstrahlung radiation 118. The activity A may be understood as the integral over one second of the decay curve, or:

$$A = N_0 \exp(-\frac{\ln(2)t}{T_{1/2}}) \tag{2};$$

where $T_{1/2}$ represents the decay half-life, $N_0$ represents the number of reactions, and t represents time. A longer half-life may involve a higher number of reactions $N_0$ to accomplish a desired source luminosity. As a first estimation, $10^{-4}$ reactions by electron may be considered.

This reaction rate may be increased by increasing the energy of the electron beam 114, the size of the sample of the otherwise non-radioactive source element 120 (e.g., $^{65}$Cu), by optimizing the distance between the Bremsstrahlung target 116 and the sample of the otherwise non-radioactive source element 120 (e.g., $^{65}$Cu), and so forth. Additionally, by increasing the energy of the Bremsstrahlung radiation 118 (e.g., to 20 MeV), an order of magnitude increase in the reaction rate may be obtained. At the same time, the 12.7 hours half-life of $^{64}$Cu limits the irradiation time before saturation. Saturation of approximately 99% is believed to occur substantially after ten times the half-life. At this amount of saturation, the $^{64}$Cu decay rate may substantially match the irradiation rate. Hence, in one embodiment, an irradiation intensity of Bremsstrahlung radiation 118 to produce at least 1.5A may be maintained during approximately 5 days to achieve approximately 99% saturation. To achieve lower saturations, shorter irradiation times may be employed.

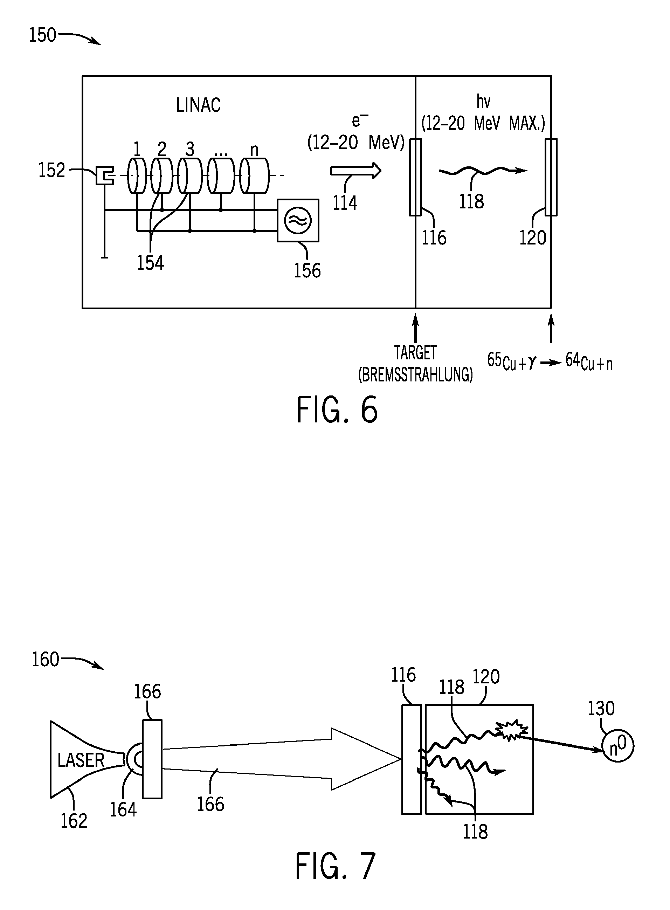

The Bremsstrahlung radiation 118 may be generated in any suitable manner. In a first example, the Bremsstrahlung radiation 118 may be generated by an electron linear accelerator (LINAC) 150, as shown in FIG. 6. The LINAC 150 includes an electron source 152 that emits electrons that are accelerated through a number of activation stages 154 to generate the electron beam 114. The activation stages 154 and the electron source 152 may be connected to an electrical signal generator 156. The electrical signal generator 156 may cause the electron source 152 to emit electrons at times when a first of the activation stages 154 generates a positive electrical field to draw the electron beam 114 out of the electron source 152 toward the conversion target 116. As the electron beam 114 moves through the first of the activation stages 154, the electrical signal generator 156 may supply a current of opposite polarity. This causes the first of the activation stages 154 to generate a negative electrical field while a second of the activation stages 154 is generating a positive electrical field. This pattern may continue as the electron beam 114 moves through the LINAC 150, continually gaining energy as it accelerates toward the conversion target 116. As mentioned above, because the Bremsstrahlung radiation 118 may be of an energy greater than 10 MeV (e.g., 15 MeV), the LINAC 150 may accelerate the electron beam 114 to a corresponding energy. Thereafter, when the Bremsstrahlung radiation 118 strikes elements of $^{65}$Cu, the artificially activated radioactive source element $^{64}$Cu plus a neutron may be generated.

The Bremsstrahlung radiation 118 used to activate the artificially activated radioactive source 72 may also be generated by a laser. For example, as shown by a laser activation system 160 in FIG. 7, a laser 162 may be focused to form a plasma 164 on a laser target 166, which may be a gas jet or a thin solid target (e.g., gold (Au) foil). The interaction of the laser 162 with the laser target 166 produces an electron distribution that may be quasi-Maxwellian, which is characterized by a hot electron temperature (e.g., up to a few tens of MeV) that scales approximately as the square root of the intensity of the laser 162. A resulting electron beam 114 or distribution may strike a conversion target 116 (e.g., Tantalum (Ta) or Tungsten (W)) set a few mm behind the laser target 166 to produce Bremsstrahlung radiation 118. The Bremsstrahlung radiation 118 may activate the non-radioactive source elements 120 which are set back a few cm behind the conversion target 116. This may allow measurements of the integrated flux of Bremsstrahlung radiation 118 while also producing radioactive source elements 128 of the artificially activated radioactive source 72. The Bremsstrahlung radiation 118 may, for instance, induce $^{65}$Cu to react to form $^{64}$Cu by ejecting a neutron 130.

Several mechanisms have been proposed to explain the acceleration of the electron beam 114 in the laser activation system 160 that may be used to generate the Bremsstrahlung radiation 118. The mechanisms that have been proposed to explain electron acceleration caused by high-intensity lasers include, among other things, the ponderomotive potential of the laser 162, fast plasma waves from the plasma 164, and/or the laser field of laser 162 itself (e.g., Self-modulated Laser Wake Field (SMLWF) or Forced Laser Wake Field (FLWF)). These mechanisms to explain electron acceleration are not mutually exclusive of each other. Indeed, these mechanisms may coexist with their relative contributions to the electron acceleration depending upon the particular conditions in which the laser system 160 is used. Parameters that may affect the electron distributions may include the laser parameters (e.g., temporal and spatial distributions of the energy and wavelength of the laser 162), the nature of the target 166 (e.g., gas, thin foil, or thick solid target 166), and/or the angle of incidence of the laser 162 on the target 166. In one embodiment, a gas jet target 166 may be used to obtain a better laser energy conversion into outgoing electrons with energy above 5 MeV.

In the example of FIG. 7, the electron beam 114 may be accelerated by focusing the laser 162 on the target 166 in the manner preformed by the "Salle jaune" laser system of the Laboratoire d'Optique Appliquee (LOA) at the Ecole Polytechnique. In the LOA, a chirped pulse amplification (CPA) beam was generated using a Ti-sapphire laser system. The laser wavelength was 0.8 $\mu$m, the pulse duration was 30 fs, and the instant energy on a laser target of gold (Au) was 1 J. The laser pulse was focused on a 10-$\mu$m-diameter spot on the laser target that included approximately 50% of the energy, using an off-axis parabolic mirror.

The activity of radioactive samples of $^{64}$Cu generated by the "Salle jaune" laser system of the LOA was measured in a load noise area with two NaI (Tl) scintillators set in coincidence to detect the two 511 keV gamma-rays caused by positronium annihilation. Results obtained at the LOA using 10 $\mu$m Au targets showed an integrated number of activations of $^{65}$Cu into $^{64}$Cu on the order of approximately 90,000 per laser pulse, with approximately $10^8$ electrons escaping from the laser target per energy unit, per solid angle unit and per pulse measured at 0° with respect to the laser direction and a few nC total charge of the electron beam. As such, it is believed that $10^{-2}$ reactions per electron may be obtained using the laser system 160 of FIG. 7. The reaction rate may be increased by achieving a better laser energy conversion (e.g., via a gas jet target 166) into outgoing electrons with energies above 5 MeV (e.g., which may be approximately 0.1%), by increasing the laser 162 pulse energy and repetition rate.

As noted above, the artificially activated radiation source 72 may have an intensity of approximately 1.7 Ci, which corresponds to approximately $6*10^{10}$ decays/s. At the same time, the 12.7 hour half-life of $^{64}$Cu limits the amount of time that may take place between irradiation and activation of the artificially activated radioactive source 72 and before saturation. Indeed, after 3.3 times the half-life, it is believed that the irradiation rate matches approximately 90% of the decay rate. As such, it is believed that an irradiation intensity of at least 5 $\mu$C/s may be used over a period of approximately 1.5 days using the laser activation system 160 to achieve a saturation of approximately 90%. To achieve a higher saturation, a longer irradiation period may be employed. Such an electron beam may be delivered, for example, by a 60 J laser activation system 160 operating at approximately 1 kHz. The laser system 160 may be located in a fixed facility, such as the LOA, or in a mobile facility, such as a mobile laser wake field accelerator of sufficient energy and/or time.

The specific embodiments described above have been shown by way of example, and it should be understood that these embodiments may be susceptible to various modifications and alternative forms. It should be further understood that the claims are not intended to be limited to the particular forms disclosed, but rather to cover modifications, equivalents, and alternatives falling within the spirit and scope of this disclosure.

**Claims**

1. A downhole tool comprising:

an artificially activated radioactive source configured to cause radiation to be emitted into a surrounding formation as the artificially activated radioactive source decays; and
one or more radiation detectors configured to detect radiation that results when the radiation that is caused to be emitted into the formation by the artificially activated radioactive source interacts with the surrounding formation.

2. The downhole tool of claim 1, wherein the artificially activated radioactive source has a half-life sufficient for one or more logging operations occurring over less than one week before the artificially activated radioactive source has decayed to a substantially stable material.

3. The downhole tool of claim 1, wherein the artificially activated radioactive source has a half-life of less than one day.

4. The downhole tool of claim 1, wherein the radiation caused to be emitted by the artificially activated radioactive source comprises monochromatic gamma-rays that form when the artificially activated radioactive source emits positrons that annihilate with electrons, wherein the monochromatic gamma-rays scatter through the formation, at least some of the scattered gamma-rays being detectable by the one or more radiation detectors to enable a gamma density measurement or a photoelectric factor (PEF) measurement, or both.

5. The downhole tool of claim 1, wherein the artificially activated radioactive source comprises $^{64}Cu$.

6. The downhole tool of claim 1, wherein the artificially activated radioactive source has an intensity of approximately 1.6 Ci or lower.

7. The downhole tool of claim 1, wherein the artificially activated radioactive source has an intensity of approximately 1.6 Ci or higher.

8. A method comprising:

irradiating an otherwise substantially non-radioactive material to produce an artificially activated radioactive source that emits radiation as the artificially activated radioactive source decays;
installing the artificially activated radioactive source in a downhole tool; and
placing the downhole tool into a wellbore to perform a radiation-based logging operation based on the radiation emitted by the artificially activated radioactive source.

9. The method of claim 8, wherein the substantially non-radioactive material is irradiated with Bremsstrahlung radiation.

10. The method of claim 9, wherein the Bremsstrahlung radiation has an energy of at least 10 MeV.

11. The method of claim 9, wherein the Bremsstrahlung radiation has an energy of at least 15 MeV and the artificially activated radioactive source comprises a radioactive source that emits positrons that annihilate with electrons to generate monochromatic gamma rays upon which the radiation-based logging operation may rely.

12. The method of claim 9, wherein the Bremsstrahlung radiation is generated using an electron linear accelerator (LINAC).

13. The method of claim 12, wherein the LINAC provides an irradiation intensity of at least 1.5A over 5 days of irradiation, wherein A is defined according to the following relationship:

$$A = N_0 \exp(-\frac{\ln(2)t}{T_{1/2}}),$$

where $T_{1/2}$ represents a decay half-life of the artificially activated radioactive source, $N_0$ represents a number of reactions occurring due to the irradiation, and $t$ represents time of irradiation.

**14.** The method of claim 9, wherein the Bremsstrahlung radiation is generated using a laser.

**15.** The method of claim 14, wherein pulses of the laser are emitted to strike a laser target to produce accelerated electrons that strike a conversion target, thereby generating the Bremsstrahlung radiation.

FIG. 1

70

82 — Y-RAY DETECTOR

12

80 — Y-RAY DETECTOR

76
e⁻
74
e⁺
72
78 — Y
74 — e⁺
78 — Y
84
78 — Y
e⁺
e⁻
76
74
78 — Y
76
78 — Y
78 — Y
78 — Y

FIG. 2

90

IRRADIATE OTHERWISE NON-RADIOACTIVE SOURCE TO CAUSE SOURCE TO BECOME RADIOACTIVE — 92

INSTALL RADIOACTIVE SOURCE INTO LOGGING TOOL — 94

PLACE LOGGING TOOL DOWNHOLE — 96

DETECT RESULTING GAMMA-RAYS TO ENABLE DETERMINATION OF FORMATION PROPERTIES — 98

FIG. 3

FIG. 4

FIG. 5

150 ⟶

LINAC

152

1 2 3 ... n

154

156

e⁻
(12–20 MeV)

114

116

hv
(12–20 MeV MAX.)

118

120

↑
TARGET
(BREMSSTRAHLUNG)

↑
$^{65}Cu + \gamma \rightarrow ^{64}Cu + n$

FIG. 6

160 ⟶

166

LASER

162  164

166

116  118  120

118

130

n⁰

FIG. 7

Europäisches
Patentamt

European
Patent Office

Office européen
des brevets

**EUROPEAN SEARCH REPORT**

Application Number

EP 13 30 6854

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2012/318968 A1 (INANC FEYZI [US]) 20 December 2012 (2012-12-20) | 1-3,8 | INV. G01V5/08 |
| Y | * figures 1, 2 * * paragraphs [0018] - [0021], [0033] * ----- | 4-7,9-15 | G21G1/12 |
| A | US 2 133 776 A (BENDER JOHN C) 18 October 1938 (1938-10-18) * figure 2 * ----- | 1-15 | |
| A | US 2 760 079 A (JACOB ARPS JAN) 21 August 1956 (1956-08-21) * figures 3, 4 * * column 6, line 12 - line 26 * ----- | 1-15 | |
| Y | WO 03/016947 A2 (BECHTEL BWXT IDAHO LLC [US]) 27 February 2003 (2003-02-27) * table I * * page 7, line 7 - line 20 * * page 14, line 17 - line 23 * * page 15, line 5 - line 15 * ----- | 4,5,9-13 | |
| Y | WO 2004/075819 A2 (EURATOM [BE]; MAGILL JOSEPH [DE]; GALY JEAN [DE]; APOSTOLIDIS CHRISTOS) 10 September 2004 (2004-09-10) * page 3, line 1 - line 19 * ----- | 14,15 | TECHNICAL FIELDS SEARCHED (IPC) G01V G01T G21G A61N |
| Y | EP 2 421 006 A1 (UNIV MUENCHEN L MAXIMILIANS [DE]; LAUE MAX INST [FR]) 22 February 2012 (2012-02-22) * paragraph [0079] * ----- | 6,7 | |

The present search report has been drawn up for all claims

| Place of search | Date of completion of the search | Examiner |
|---|---|---|
| The Hague | 6 May 2014 | Johnstone, John |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
 
& : member of the same patent family, corresponding document

EPO FORM 1503 03.82 (P04C01)

**EP 2 887 103 A1**

## ANNEX TO THE EUROPEAN SEARCH REPORT
## ON EUROPEAN PATENT APPLICATION NO.

EP 13 30 6854

This annex lists the patent family members relating to the patent documents cited in the above-mentioned European search report.
The members are as contained in the European Patent Office EDP file on
The European Patent Office is in no way liable for these particulars which are merely given for the purpose of information.

06-05-2014

| Patent document cited in search report | | Publication date | Patent family member(s) | | | Publication date |
|---|---|---|---|---|---|---|
| US 2012318968 | A1 | 20-12-2012 | GB | 2507010 | A | 16-04-2014 |
| | | | US | 2012318968 | A1 | 20-12-2012 |
| | | | WO | 2012174217 | A2 | 20-12-2012 |
| US 2133776 | A | 18-10-1938 | NONE | | | |
| US 2760079 | A | 21-08-1956 | NONE | | | |
| WO 03016947 | A2 | 27-02-2003 | AU | 2002254347 | A1 | 03-03-2003 |
| | | | EP | 1428227 | A2 | 16-06-2004 |
| | | | US | 2003043951 | A1 | 06-03-2003 |
| | | | US | 2003048864 | A1 | 13-03-2003 |
| | | | WO | 03016947 | A2 | 27-02-2003 |
| WO 2004075819 | A2 | 10-09-2004 | AT | 451932 | T | 15-01-2010 |
| | | | AU | 2004216486 | A1 | 10-09-2004 |
| | | | AU | 2009233674 | A1 | 26-11-2009 |
| | | | CA | 2519349 | A1 | 10-09-2004 |
| | | | DK | 1596886 | T3 | 29-03-2010 |
| | | | EP | 1452185 | A1 | 01-09-2004 |
| | | | EP | 1596886 | A2 | 23-11-2005 |
| | | | EP | 2177232 | A2 | 21-04-2010 |
| | | | ES | 2337786 | T3 | 29-04-2010 |
| | | | US | 2006257315 | A1 | 16-11-2006 |
| | | | WO | 2004075819 | A2 | 10-09-2004 |
| EP 2421006 | A1 | 22-02-2012 | EP | 2421006 | A1 | 22-02-2012 |
| | | | EP | 2606489 | A1 | 26-06-2013 |
| | | | US | 2013163707 | A1 | 27-06-2013 |
| | | | WO | 2012022491 | A1 | 23-02-2012 |

EPO FORM P0459

For more details about this annex : see Official Journal of the European Patent Office, No. 12/82